# EUROPEAN PATENT SPECIFICATION

(11) **EP 4 084 632 B1**
(45) Date of publication and mention of the grant of the patent: **04.10.2023**
(21) Application number: 20835855.6
(22) Date of filing: 30.12.2020
(51) Int. Cl.: A24B 15/24, B01D 11/02, B65G 33/18, B65G 33/24, B65G 33/32

(54) **EXTRACTION APPARATUS WITH SCREW CONVEYORS FOR TOBACCO MATERIAL**
EXTRAKTIONSVORRICHTUNG MIT SCHRAUBFÖRDERERN FÜR TABAKMATERIAL
APPAREIL D'EXTRACTION AVEC TRANSPORTEURS À VIS POUR MATÉRIAU À BASE DE TABAC

(30) Priority: 30.12.2019 EP 19219971
(43) Date of publication of application: 09.11.2022
(73) Proprietor: Philip Morris Products S.A., 2000 Neuchâtel (CH)
(72) Inventor: BATISTA, Rui Nuno, 2000 Neuchâtel (CH); CALI, Ricardo, 68163 Mannheim (DE); LÖB, Andreas, 68163 Mannheim (DE)
(74) Representative: Grünecker Patent- und Rechtsanwälte PartG mbB
(86) International application number: PCT/EP2020/088009
(87) International publication number: WO 2021/136796

(56) References cited:
- EP-A2- 0 057 979
- WO-A2-2004/041005
- US-A- 5 360 022
- US-A1- 2015 136 151

## Description

The present invention relates to an apparatus, method and use for extracting ingredients from plant material, in particular, alkaloids, such as nicotine, or and tobacco flavors from tobacco material.

WO 2007/053097 A1 discloses a method of producing a tobacco product, wherein harvested plant material may be mixed with a water solution to which a base is added, and the plant mixture may then be packed in a vessel, such as a percolator or reactor vessel, to extract nicotine from the plant material.

Furthermore, it is known in the prior art to use screw presses for the purpose of dehydration. EP 0 358 837 A1 discloses a dehydrating screw press with two or more helical elements with intermeshing profile, by which an advancing product to be dehydrated is pressed against the wall of a filtering cage.

EP 0 057 979 A2 discloses an apparatus for extracting soluble constituents from cut plant material. The apparatus has a conduit having at its material output end plant material discharge means and a liquid inlet and at its material input end plant material feed means and a liquid overflow.

It is an object of the invention to provide an improved or alternative apparatus or method for the extraction of ingredients from plant material, in particular alkaloids, such as nicotine, or tobacco flavors from tobacco material. In particular, it is desired that the apparatus or method enables and improves control of the extraction process.

According to an aspect of the present invention, there is provided an apparatus for the extraction of ingredients from plant material, in particular, alkaloids, such as nicotine, or tobacco flavors from tobacco material, wherein the apparatus comprises a first screw conveyor with at least one rotatably driven first screw. The at least one rotatably driven first screw is adapted to convey the plant material from a first screw conveyor inlet to a first screw conveyor outlet. The apparatus further comprises a second screw conveyor with at least one rotatably driven second screw. The at least one rotatably driven second screw is adapted to convey the plant material from a second screw conveyor inlet to a second screw conveyor outlet. A fluid connection is provided in between the first screw conveyor outlet and the second screw conveyor inlet. The fluid connection is adapted to enable flow of plant material from the first screw conveyor outlet to the second screw conveyor inlet. The first screw conveyor has a first fluid outlet at its downstream side. The second screw conveyor has a second fluid outlet at its downstream side.

In each fluid outlet, extracting liquid with a different concentration of plant ingredients, in particular tobacco flavor or alkaloids, such as nicotine, may be separated from the conveyed material. In some embodiments, the same plant ingredients, in particular tobacco flavors, may be present in the extracting liquid at the different fluid outlets but in a different concentration.

The plant material is in particular a mixture of plant components with a fluid, in particular an extracting liquid. The plant material may be tobacco material, in particular a mixture of tobacco components with a fluid, in particular the extracting liquid. In particular, the extracting liquid may be water or an aqueous solution. The plant material may form a suspension or slurry. In particular, the plant components are mixed with the fluid to enable smooth transport through the screw conveyor.

The extracting liquid may be adapted to extract alkaloids, in particular nicotine, or tobacco flavors, or alkaloids, in particular nicotine, and tobacco flavors from the tobacco material. The extracting liquid may be water, in some embodiments without any additives. In other embodiments, the extracting liquid may comprise extracting agents. The extracting liquid may comprise at least one of the extracting agents: preferably sodium hydroxide, NaOH, or limestone, in particular calcium carbonate, CaCO3, or lime, in particular calcium hydroxide, or carbon dioxide, CO2. Preferably, the extracting liquid may comprise 3 to 15 percent by weight of extracting agents, more preferably 5 to 12 percent by weight of extracting agents, and even more preferably 8 to 10 percent by weight of extracting agents. In particular, the extracting liquid may comprise up to 10 percent by weight of extracting agents.

The plant components may comprise or may exclusively consist of previously cut and ground plant material. The tobacco components may comprise or may exclusively consist of previously cut and ground tobacco plant material. In particular, the tobacco components may comprise at least one of the following: unprocessed tobacco leaves, processed tobacco leaves, residues from the processing of tobacco leaves, in particular in-process residues and after-process residues, gross flakes of tobacco, fine flakes of tobacco, gross particles of tobacco or tobacco powder. The tobacco components may in particular be the results of standard primary processing or secondary processing of tobacco during the production of tobacco products.

The term "tobacco" is used herein with reference to the present invention to describe any part of any plant member of the genus Nicotiana, including, but not limited to, leaves, midribs, stems and stalks. In particular, the natural tobacco may comprise Bright tobaccos, aromatic tobacco, Maryland tobacco material, dark tobacco material, dark-fired tobacco material, Rustica tobacco material, as well as material from other rare or specialty tobaccos, or blends thereof. As will be described in more detail below, the tobacco material may be whole (for example, whole tobacco leaves), shredded, cut or ground.

Bright tobaccos are tobaccos with a generally large, light coloured leaves. Throughout the specification, the term "bright tobacco" is used for tobaccos that have been flue cured. Examples for bright tobaccos are Chinese Flue-Cured, Flue-Cured Brazil, US Flue-Cured such as Virginia tobacco, Indian Flue-Cured, Flue-Cured from Tanzania or other African Flue Cured. Bright tobacco is characterized by a high sugar to nitrogen ratio. From a sensorial perspective, bright tobacco is a tobacco type, which, after curing, is associated with a spicy and lively sensation. Bright tobaccos are tobaccos with a content of reducing sugars of between about 2.5 percent and about 20 percent on dry weight basis of the leaf and a total ammonia content of less than about 0.12 percent on dry weight basis of the leaf. Reducing sugars comprise for example glucose or fructose. Total ammonia comprises for example ammonia and ammonia salts.

Dark tobaccos are tobaccos with a generally large, dark coloured leaves. Throughout the specification, the term "dark tobacco" is used for tobaccos that have been air cured. Additionally, dark tobaccos may be fermented. Tobaccos that are used mainly for chewing, snuff, cigar, and pipe blends are also included in this category. From a sensorial perspective, dark tobacco is a tobacco type, which, after curing, is associated with a smoky, dark cigar type sensation. Dark tobacco is characterized by a low sugar to nitrogen ratio. Examples for dark tobacco are Burley Malawi or other African Burley, Dark Cured Brazil Galpao, Sun Cured or Air Cured Indonesian Kasturi. Dark tobaccos are tobaccos with a content of reducing sugars of less than about 5 percent of dry weight base of the leaf and a total ammonia content of up to about 0.5 percent of dry weight base of the leaf.

Aromatic tobaccos are tobaccos that often have small, light coloured leaves. Throughout the specification, the term "aromatic tobacco" is used for other tobaccos that have a high aromatic content, for example a high content of essential oils. From a sensorial perspective, aromatic tobacco is a tobacco type which, after curing, is associated with spicy and aromatic sensation. Example for aromatic tobaccos are Greek Oriental, Oriental Turkey, semi-oriental tobacco but also Fire Cured, US Burley, such as Perique, Rustica, US Burley or Meriland.

Additionally, a blend may comprise so called filler tobaccos. Filler tobacco is not a specific tobacco type, but it includes tobacco types which are mostly used to complement the other tobacco types used in the blend and do not bring a specific characteristic aroma direction to the final product. Examples for filler tobaccos are stems, midrib or stalks of other tobacco types. A specific example may be flue cured stems of Flue Cured Brazil lower stalk.

Within each type of tobaccos, the tobacco leaves are further graded for example with respect to origin, position in the plant, colour, surface texture, size and shape. These and other characteristics of the tobacco leaves are used to form a tobacco blend. A blend of tobacco is a mixture of tobaccos belonging to the same or different types such that the tobacco blend has an agglomerated specific characteristic. This characteristic can be for example a unique taste or a specific aerosol composition when heated or burned. A blend comprises specific tobacco types and grades in a given proportion one with respect to the other.

Different grades within the same tobacco type may be cross-blended to reduce the variability of each blend component. The different tobacco grades may be selected in order to realize a desired blend having specific predetermined characteristics. For example, the blend may have a target value of the reducing sugars, total ammonia and total alkaloids per dry weight base of the homogenized tobacco material. Total alkaloids are for example nicotine and the minor alkaloids including nornicotine, anatabine, anabasine and myosmine.

For example, bright tobacco may comprise tobacco of grade A, tobacco of grade B and tobacco of grade C. Bright tobacco of grade A has slightly different chemical characteristics to bright tobacco of grade B and grade C. Aromatic tobacco may include tobacco of grade D and tobacco of grade E, where aromatic tobacco of grade D has slightly different chemical characteristics to aromatic tobacco of grade E. A possible target value for the tobacco blend, for the sake of exemplification, can be for example a content of reducing sugars of about 10 percent in dry weight basis of the total tobacco blend. In order to achieve the selected target value, a 70 percent bright tobacco and a 30 percent aromatic tobacco may be selected in order to form the tobacco blend. The 70 percent of the bright tobacco is selected among tobacco of grade A, tobacco of grade B and tobacco of grade C, while the 30 percent of aromatic tobacco is selected among tobacco of grade D and tobacco of grade E. The amounts of tobaccos of grade A, B, C, D, E which are included in the blend depend on the chemical composition of each of the tobaccos of grades A, B ,C, D, E so as to meet the target value for the tobacco blend.

The tobacco components may initially already have a moisture content or water content in the range of 10 percent to 60 percent by weight, preferably of 15 percent to 45 percent by weight, and more preferably of 20 percent to 40 percent by weight. Further fluid, in particular water, may be added to the tobacco components during the processing of same in the apparatus.

In particular, in the first screw conveyor and second screw conveyor, water, in particular an aqueous solution, is provided as a liquid phase. The liquid phase may act as a natural absorber of nicotine or tobacco flavors or nicotine and tobacco flavors from the tobacco material. Pure water, such as tab water or distilled water, or water with extracting agents may be a beneficial extraction liquid for removing natural nicotine from tobacco material.

The inventive apparatus may also be used for the extraction of flavor or other ingredients from herbaceous material other than tobacco. The term "herbaceous material" is used to denote material from an herbaceous plant. A "herbaceous plant" is an aromatic plant, where the leaves or other parts of the plant are used for medicinal, culinary or aromatic purposes and are capable of releasing flavour into the aerosol produced by an aerosol generating article. Herbaceous material includes herb leaf or other herbaceous material from herbaceous plants including, but not limited to, mints, such as peppermint and spearmint, lemon balm, basil, cinnamon, lemon basil, chive, coriander, lavender, sage, tea, thyme and caraway. Suitable types of mint leaf may be taken from plant varieties including but not limited to Mentha piperita, Mentha arvensis, Mentha niliaca, Mentha citrata, Mentha spicata, Mentha spicata crispa, Mentha cordifolia, Mentha longifolia, Mentha pulegium, Mentha suaveolens, and Mentha suaveolens variegata.

Preferably, the fluid connection may be a tube, a pipe or an opening in a common wall in between the first screw conveyor and second screw conveyor.

The conveying direction of the screw conveyors corresponds in particular to the longitudinal respectively axial extension of their respective screws. The conveying direction defines the direction from an upstream position to a downstream position, in particular the direction in which the plant material is conveyed.

The screw conveyors do not have to be aligned with each other. In particular, the conveying directions of the screw conveyors may be inclined with respect to each other. This means that the plant material in the first conveyor may be conveyed in a first conveying direction, which is different from a second conveying direction of the plant material in the second screw conveyor. In particular, the conveying direction of the plant material may be changed in the fluid connection. In particular, the inflow direction into the fluid connection may be different from the outflow direction out of the fluid connection. Thus, the screws of the at least two subsequent screw conveyors may extend in different or opposite directions. In particular, the screw conveyors may be arranged with their respective at least one screw being arranged in parallel, but opposite directions. This enables to provide a more compact apparatus.

However, in a preferred embodiment, the at least two screw conveyors are aligned, and have the same general conveying direction. In particular, the at least two screw conveyors may be arranged axially in line with each other and the respective screws may be aligned and mechanically connected. Aligning the at least two screw conveyors enables that the screws of the at least two screw conveyors may be driven by only one drive.

The two subsequent screw conveyors may form different stages, in which the plant material may be subjected to substantially different processing conditions, for example with respect to pressure, heat or friction in the conveyors.

During an extraction process, the amount of ingredients in the plant material to be still extracted is reduced. The extraction state indicates in particular how much of the ingredients to be extracted have already been extracted from the plant material. In the stages, the processing conditions may be varied along the conveying direction. This may enable a continuous extraction with continuously adapted boundary conditions for each extraction state of the plant material. This is not possible in batch processes as known in the prior art. The benefit is a better extraction process control, in particular more precise extraction. In particular, predominantly the desired ingredients are extracted. Furthermore, a better extraction efficiency may be obtained, namely a higher amount of extracted ingredients.

In particular, the plant material is tobacco material, wherein the tobacco flavors are extracted together with alkaloids, in particular nicotine, from the tobacco material. It is also possible that the predominant extraction of alkaloids is provided at a different stage than the predominant extraction of tobacco flavors.

In particular, the screw of the screw conveyor has an inner shaft extending in an axial direction of the screw and at least one helical thread on the inner shaft. The inner shaft defines the inner diameter. The crests of the at least one thread defines the outer diameter of the screw. The inner shaft is in particular cylindrical or conical. The outer diameter of the screw is in particular cylindrical or conical along the axial extension of the screw. The distance of the threads to each other in the axial direction defines the pitch of the threads. The lead of the screw is defined by axial distance of the crests of the thread after each extension around the shaft. The lead differs from the pitch, when there are several threads arranged on the shaft. The threads may be substantially flat, curved or involute threads.

In an embodiment, at least one of the screw conveyors may be adapted to apply different shear forces to the plant material than at least one of the other screw conveyors. In an upstream screw conveyor, in particular the first screw conveyor, high shear forces may break open the plant components to enable better extraction of ingredients, such as tobacco flavors or alkaloids. In a downstream screw conveyor, in particular the second screw conveyor, the extraction may then be effected at higher temperatures and lower shear forces. In particular, the difference in shear forces may be enabled by different frictional properties of the respective screw conveyors. The different frictional properties may be obtained by different geometries of the screw. Alternatively or additionally, the different frictional properties may be obtained by different characteristics of the screw's surface, such as roughness or protrusions provided on the threads or inner shaft or threads and inner shaft.

The screw conveyor may form a closed conveying volume. The closed conveying volume exactly defines the conveyed volume with each turn of its conveyor screw. Alternatively, the screw conveyor may form an open conveying volume. In an open conveying volume, the conveying is enabled by friction in between the conveyed material and the conveyor screw. Screw conveyors with an open conveying volume may comprise only a single screw. Alternatively, an open conveying volume may be defined in between two screws or several screws in a screw conveyor.

The pressure increase in the conveying volume, in particular in the open conveying volume, may be controlled by an electronic controller, setting the rotational speed of the at least one screw.

In an embodiment, at least one of the screw conveyors has two rotatably driven screws arranged therein. In particular, these screws may be arranged in parallel in the screw conveyor. Both screws may cooperate to convey the same plant material.

In an embodiment, the crests on the threads on the proximal sides of the screws are adjacent to each other. In this context adjacent means that the crests of the two screws may be in contact with each other or in direct proximity. For example, the crests are only separated by a manufacturing tolerance. In particular, an open conveying volume is formed in between the screws.

In an embodiment, the threads of the two rotatably driven screws of at least of the screw conveyors engage each other. In particular, the flanks of the threads of the two rotatably driven screws are in physical contact with each other. This may be particularly be enabled by involute thread geometries, enabling a defined line of contact in between the flanks. Thus, closed conveying volumes may be defined in between the screws. This enables that the volume of conveyed material is exactly defined with respect to the rotation of the screws of the screw conveyor.

In an embodiment, the apparatus comprises a third screw conveyor with at least one rotatably driven screw, which is adapted to convey the plant material from a third screw conveyor inlet to a third screw conveyor outlet. In particular, a fluid connection adapted to enable flow of plant material from the second screw conveyor outlet to the third screw conveyor inlet is provided in between the second screw conveyor outlet and the third screw conveyor inlet. In particular, the third screw conveyor comprises a third fluid outlet at its downstream side. Thus, three different stages for the extraction of ingredients, in particular tobacco flavors or alkaloids, such as nicotine, may be provided, each with different processing conditions.

The conveyed material may be compressed by altering the conveying volume along the conveying direction. If the conveying volume is decreased along the conveying direction, the pressure exerted on the conveyed plant material may be increased. If the conveying volume is increased along the conveying direction, the pressure exerted on the conveyed plant material may be reduced.

Optionally, in at least one of the screw conveyors, the pitch of the threads of the at least one rotatably driven screw varies along the axial direction of the screw. The conveying volume may be increased or decreased along the conveying direction of the screw, which enables to lower or increase the pressure in the conveyed plant material along the conveying direction of the screw. The pitch of the threads of the shaft may continuously decrease along the axial direction of the screw. Thus, the pressure along the conveying direction of the screw continuously increases. The pitch of the threads of the shaft may continuously increase along the axial direction of the screw. Thus, the pressure along the conveying direction of the screw continuously decreases. The pitch of the threads of the shaft may decrease abruptly, for example by a sharp bend in the thread. This provides for a rather abrupt increase of pressure in the plant material during the conveying of the plant material. The pitch of the threads of the shaft may increase abruptly, for example by a sharp bend in the thread. This provides for a rather abrupt decrease of pressure in the plant material during the conveying of the plant material.

Optionally, in at least one of the screw conveyors, the diameter of the shaft of the screw varies along the axial direction of the screw. This may alter the conveying volume along the conveying direction, and, thus, the pressure exerted on the conveyed plant material. This applies in particular, when the outer diameter of the screw is constant along the longitudinal extension of the screw. In particular, the diameter of the shaft continuously increases along the axial direction of the screw. Alternatively, the diameter of the shaft continuously decreases along the axial direction of the screw. This provides for a continuous alteration of pressure in the plant material along the conveying direction. In particular, the diameter of the shaft increases in at least one or several steps along the axial direction of the screw. Alternatively, the diameter of the shaft decreases in at least one or several steps along the axial direction of the screw. This provides for at least one abrupt alteration of pressure in the plant material along the conveying direction, in particular when the conveying volume is closed.

At least one of the screw conveyors may comprise a sieve being arranged at least partially in the axial and circumferential direction adjacent to the screw. The sieve may allow the separation of fluid from the plant material. In particular, the sieve enables to extract fluid from the plant material conveyed in the screw conveyor. The sieve may be provided by a partially closed and partially open structure. In particular, the sieve may be formed by a sheet material with openings, or by interwoven threads. In preferred embodiments, the sieve may be formed of metal. The sieve may be provided at the fluid outlet of the corresponding screw conveyor. Fluid entering the fluid outlet may have to pass through the sieve. There may be a sieve at the first fluid outlet. There may be a sieve at the second fluid outlet. There may be a sieve at the optional third fluid outlet.

In a preferred embodiment, at least one of the screw conveyors comprises a fluid inlet at its upstream side. The fluid inlet enables, in particular, that an extracting liquid may be added to the plant material conveyed in the screw conveyor, to provide favourable conditions for the extraction of ingredients, such as tobacco flavors or alkaloids. In one embodiment, only one fluid inlet is adapted to provide different fluids to the plant material. For this purpose, in particular, at least two reservoirs of liquid may be connected to the fluid inlet. The different extracting liquids may be selected and provided depending on the state and type of plant material. Preferably, the first screw conveyor may have a first fluid inlet at its respective upstream side, and the second screw conveyor may have a second fluid inlet at its respective upstream side. The first fluid inlet and second fluid inlet may be connected to different fluid reservoirs. Thus, different fluids may be provided to the different processing stages. In particular, a first fluid may be provided in a first stage and a different, second fluid may be provided in a second stage. For example, a first fluid may serve to disintegrate the plant components in the first stage, while a second fluid may serve to extract ingredients, such as tobacco flavors or alkaloids, or tobacco flavors and alkaloids in the second stage. In some embodiments, a first liquid may serve to extract primarily alkaloids, in particular nicotine, and a second fluid may serve to primarily extract tobacco flavors.

In an embodiment, at least one of the screw conveyors may be adapted to alter the pressure in the plant material while conveying the plant material. In particular, the first screw conveyor may be adapted to increase the pressure in the plant material. Furthermore, the second screw conveyor may be adapted to maintain the pressure in the plant material at a higher level than the pressure in the plant material in the first screw conveyor. Alternatively, the pressure may be lowered in the second screw conveyor. If a third screw conveyor is provided, the pressure may be lowered in the third screw conveyor. The alteration of the pressure may in particular be obtained by a variation of the pitch of the threads of the screws, or by the variation of the diameter of the inner shaft of the screws as mentioned above. After processing in one of the screw conveyors, the fluid may comprise different types or concentrations of plant ingredients, in particular tobacco flavors, depending on the pressure applied upstream of the fluid outlet.

The fluid connection between the first screw conveyor and the second screw conveyor may be adapted to enable flow of plant material and fluid therethrough. The optional fluid connection between the second screw conveyor and the optional third screw conveyor may be adapted to enable flow of plant material and fluid therethrough. The first fluid outlet, the second fluid outlet and the optional third fluid outlet may be adapted to enable flow of fluid therethrough. The first fluid outlet, the second fluid outlet and the optional third fluid outlet may be adapted to prevent flow of plant material therethrough.

According to a further aspect, the invention provides a method for the extraction of at least one alkaloid, such as nicotine, or at least one tobacco flavor, preferably both tobacco flavors and alkaloids, from tobacco material, in particular from preprocessed tobacco material, wherein the tobacco material is initially mixed with an extracting liquid. The tobacco material is then continuously conveyed together with the extracting liquid, while separating the extracting liquid from the tobacco material. The method may, in particular, extract at least one alkaloid and at least one tobacco flavor. The method may extract at least one alkaloid and at least one tobacco flavor in parallel. Alternatively, the method may extract at least one alkaloid and at least one tobacco flavor subsequently, in particular in different stages. The tobacco material is continuously conveyed through subsequent stages, wherein in each of these stages, extracting liquid is at least partially separated from the tobacco material at a downstream position.

In contrast to batch processes as known in the prior art, the conveying of the tobacco material together with the extracting liquid takes place at the same time and at the same location as the separation of the extracting liquid of the tobacco material. The tobacco material and extracting liquid may be conveyed, while the extracting liquid may be extracted at a downstream location of the conveying process. At this downstream location, the tobacco material and at least parts of the extracting liquid are still continuously conveyed, while at the same time the extracting liquid is separated from the tobacco material.

In particular, the separation may be enabled by providing a sieve along which the tobacco material and extracting liquid is conveyed. Depending on the pressure applied on the conveyed tobacco material and extracting liquid, a larger or smaller portion of the extracting liquid is separated from the tobacco material. The extraction method enables to conduct the process in a steady state, where the boundary conditions, such as temperature and pressure for the tobacco material and extracting liquid are locally constant, but vary along a conveying direction. While initially, with low temperature and pressure, an extraction of ingredients is possible, the extraction of further ingredients may require higher temperature and pressure. Thus, a constant process result may be obtained by increasing the temperature and pressure, along the process in view of the decreasing ingredients in the tobacco material.

In an embodiment of the method, in each of the stages, extracting liquid is injected at an upstream position. The injection of extracting liquid into the tobacco material and separation of extracting liquid from the tobacco material at several locations enables to bring the tobacco material repeatedly in contact with an extracting liquid that has a low saturation of tobacco flavor or alkaloids, promoting the extraction efficiency. In some embodiments, the same extracting liquid may be used in the subsequent stages. In other embodiments, different extracting liquids may be used at least in some of the different stages.

In an embodiment of the method, the tobacco material may be continuously conveyed through subsequent stages, wherein in a first stage, the pressure and temperature is progressively increased. This enables in particular, to break the overall structure of the tobacco material, and in particular break the cells in the tobacco material, to make the tobacco flavors or alkaloids or tobacco flavors and alkaloids available for extraction. In a second stage, the tobacco flavors or alkaloids or tobacco flavors and alkaloids may be extracted. In a third stage additional tobacco flavors or alkaloids or additional tobacco flavors and alkaloids may be extracted.

In particular, the first stage is formed by a first screw conveyor. The second stage may be formed by a second screw conveyor. The third stage may be formed by a third screw conveyor.

The subsequent stages may be connected by a fluid connection, in particular, in the form of a tube or pipe.

In particular, the temperature of the tobacco material at the end of the second stage is higher than the temperature of the tobacco material at the end of the first stage. This enables to first extract more fragile ingredients from the tobacco material in the first stage and to extract a large quantity of the remaining ingredients from the tobacco material in the second stage. In particular, the temperature may be elevated to 45 degrees Celsius to 70 degrees Celsius, preferably to 50 degrees Celsius to 60 degrees Celsius in the first stage. This temperature is beneficial for the extraction of alkaloids or tobacco flavors from tobacco material in the initial extraction process. The temperature in the at least one subsequent stage may be higher than in the first stage. Preferably, the temperature at the end of the second stage is 55 degrees Celsius to 75 degrees Celsius, more preferably 55 degrees Celsius to 65 degrees Celsius. This temperature is beneficial for the extraction of alkaloids or tobacco flavors from tobacco material in a second extraction process.

In particular, the temperature of the tobacco material at the beginning of the first stage may be in the range of 20 degrees Celsius to 55 degrees Celsius, preferably from 35 degrees Celsius to 45 degrees Celsius. The temperature of the tobacco material at the first screw conveyor inlet may be actively controlled, namely heated or cooled, to have a constant temperature, in particular above ambient temperature. The temperature control enables that the process is not influenced by temperature variations of the material at the inlet, which in fact may vary significantly, as the process may be performed in industrial buildings without temperature control, and in many different countries, with different climate.

Preferably, the temperature of the tobacco material at the beginning of the second stage is 45 degrees Celsius to 70 degrees Celsius, or more preferably, 50 degrees Celsius to 60 degrees Celsius.

In particular, the pressure in the tobacco material at the end of the second stage is higher than the pressure in the tobacco material at the end of the first stage. This enables to first extract more fragile ingredients from the tobacco material in the first stage and to extract a large quantity of the remaining ingredients from the tobacco material in the second stage. The extraction may be even improved, when the temperature of the tobacco material and the pressure in the tobacco material at the end of the second stage is higher than the temperature of the tobacco material and the pressure in the tobacco material at the end of the first stage.

The following pressure indications define the pressure relative to ambient pressure.

The pressure in the tobacco material at the end of the first stage may be elevated to in between 1 bar and 2.7 bar. In particular, the pressure in the tobacco material at the end of the first stage may be elevated to above 2 bar. In particular, the pressure in the tobacco material at the end of the first stage may be below 3 bar, preferably below 2.8 bar.

In particular, the pressure in the tobacco material varies along the screw and will typically reach the maximum at the downstream end of the screw. In particular, the pressure in the tobacco material increases along the screw in the conveying direction for the at least one extraction stage.

Subsequently, and in particular, at the end of the second stage, the extracting liquid may be separated from the tobacco material at least partially.

The pressure in the tobacco material at the end of the second stage may be in between 2.5 bar and 5 bar. Preferably, the pressure in the tobacco material at the end of the second stage is in between 2.7 bar and 4.8 bar.

Preferably, the temperature of the tobacco material at the beginning of the third stage is 55 degrees Celsius to 75 degrees Celsius, more preferably 55 degrees Celsius to 65 degrees Celsius. Preferably, the temperature at the end of the third stage is 45 degrees Celsius to 60 degrees Celsius, more preferably 45 degrees Celsius to 55 degrees Celsius.

In a third stage, the pressure in the tobacco material may be elevated to above 3 bar to extract the liquid from the tobacco material, in particular to in between 3 bar and 4.5 bar. Preferably, the pressure in the tobacco material at the end of the third stage is in between 3.4 bar and 4.1 bar.

Preferably, the temperature of the tobacco material in all stages, respectively all screw conveyors, is below 100 degrees Celsius, more preferably below 80 degrees Celsius. Thus, the formation of a gas phase can be avoided.

The above-mentioned temperature ranges and pressures are beneficial for the extraction of tobacco flavors and alkaloids from tobacco material, in particular, when using water as an extracting liquid.

Preferably, the temperature of the tobacco material may continuously increase, while the tobacco material is continuously conveyed in one of the stages. In particular, heating elements may be provided along the conveying direction of the tobacco material. In particular, separate heating elements may be provided at different locations along the conveying direction of the tobacco material.

The tobacco material may be homogenized in the first stage. For this purpose, a screw conveyor with an increased friction factor may be provided.

In a preferred embodiment, the conveying may be effected by at least two subsequent screw conveyors, wherein a friction factor of the screw conveyors increases at least partially in the downstream direction. Preferably, the most downstream screw conveyor has the highest friction factor, to extract most of the remaining tobacco flavors and alkaloids from the tobacco material.

The friction of the fluid flow along the screw conveyors may be defined by the Darcy-Weisbach equation. Higher friction may lead to a steeper pressure increase in the tobacco material in the respective screw conveyor, in particular for an open conveying volume. Higher friction may lead to higher mechanical forces, stressing the tobacco material, in particular to open the structure and cells of the tobacco material, improving the extraction of the ingredients. In particular, in a first conveyor, the Darcy friction factor is preferably from 0.04 to 0.35, or more preferably from 0.06 to 0.23. In a second stage, the Darcy friction factor may be from about 0.04 to 0.35 or more preferably from 0.06 to 0.23. In a third stage, the Darcy friction factor may be from about 0.12 to 0.30, or more preferably from 0.15 to 0.20.

At the beginning of a second stage, an extracting liquid may be injected, and subsequently the extracting liquid, comprising at least one tobacco flavor or at least one alkaloid or tobacco flavors and alkaloids, may be extracted from the tobacco material. The extracting liquid may be water or an aqueous solutions with extracting agents as previously specified.

At the end of the last stage, the pressure in the tobacco material may be reduced, while the shear forces on the tobacco material are increased.

In particular, the Darcy friction factor is increased to more than 0.12 and more preferably to more than 0.15. This serves to extract the liquid components from the solid tobacco components.

In one embodiment, the conveying of the tobacco material and extracting liquid is effected by at least one screw conveyor turning at less than 85 rounds per minute, preferably at less than 60 rounds per minute.

Preferably, in between 300 kg to 900 kg of tobacco components are processed by the hour.

In a preferred embodiment, the extracting liquid is water, either with the addition of additional extracting agents or pure water.

In one embodiment, the temperature elevation may be effected by the injection of hot water or vapour. For this purpose, nozzles may be provided along the extension of the stages, in particular, along the axial extension of the screw conveyors. Hot water may be injected at a higher temperature than the tobacco material at the upstream end of at least one of the screw conveyors, preferably at the upstream ends of all screw conveyors. Injecting only hot water and not vapour may help to control to keep the temperature below 100 degrees Celsius.

According to a further aspect of the invention, a use of a screw conveyor for extracting at least one tobacco flavor or at least one alkaloid, preferably both tobacco flavors and alkaloids, from tobacco material, in particular from preprocessed tobacco material, is provided. The tobacco material is continuously conveyed through subsequent stages, wherein in each of these stages, extracting liquid is at least partially separated from the tobacco material at a downstream position. A screw conveyor may be beneficially used for this extraction process, since it allows to establish constant processing conditions with precisely predetermined pressure, temperature and friction factor profiles along the conveying direction. Therefore, a constant product quality and high extraction efficiency is obtainable. Since the screw conveyor may be operated continuously, it enables a high productivity.

In particular, the inventive apparatus, method and use may be used for tobacco, which comprises or consists of pre-processed tobacco material. The tobacco material may be pre-processed particularly for the extraction according to the invention or may have been pre-processed in a different tobacco product manufacturing process. In some embodiments, unprocessed tobacco material may be used. In particular, the pre-processing of the tobacco material may comprise at least one of the steps of blending and collecting. Blending enables to homogenize the tobacco material, resulting in a consistent process and high performance, which may be optimized for the consistent tobacco material.

For pre-processing, the tobacco plants may be subjected to chemical extraction of ingredients, in particular flavor. For the chemical extraction, carbon dioxide or nitrogen may be used. The physical structure of the plant material may be left substantially intact, by keeping mechanical stress to a minimum. The tobacco material recovered from such pre-processing has still a high level of alkaloids or tobacco flavours, which may be extracted by the apparatus or method according to the invention.

For pre-processing, the tobacco material may also be subjected to casing, in particular blended with additional flavours or other ingredients.

It is particularly beneficial to extract tobacco flavors together with at least one alkaloid, such as nicotine, from the tobacco material as enabled by the present invention, since the product of the inventive apparatus, method and use may be used in the manufacture of a liquid for aerosol generating articles, such as electronic cigarettes.

The screw conveyors preferably have a length in between 1.2 meters and 2.7 meters.

In particular, the diameter of the at least one inner shaft of the screw of a downstream screw conveyor is greater than the diameter of the inner shaft of the at least one screw of an upstream screw conveyor. Preferably, the diameter of the inner shaft of the at least one screw of each downstream screw conveyor is greater than the diameter of the inner shaft of the at least one screw of the respectively adjacent upstream screw conveyor. Preferably, the diameter of the inner shaft of the at least one screw in the first screw conveyor is in between 0.11 meters and 0.37 meters. Preferably, the diameter of the inner shaft of the at least one screw in the second screw conveyor is in between 0.16 meters and 0.41 meters. Preferably, the diameter of the inner shaft of the at least one screw in the third screw conveyor is in between 0.18 meters and 0.51 meters.

Preferably, the diameter of the screws is in between 0.2 meters and 0.7 meters for all screw conveyors.

In an embodiment, the outer diameter of the screws is constant in all screw conveyors.

In particular, the turning speed of the at least one screw of a downstream screw conveyor is greater than the turning speed of the at least one screw of an upstream screw conveyor. Preferably, the turning speed of the at least one screw of each downstream screw conveyor is greater than the turning speed of the at least one screw of the respectively adjacent upstream screw conveyor. In particular, the at least one screw of the first screw conveyor turns at 15 rounds per minute to 85 rounds per minute, preferably 23 rounds per minute to 47 rounds per minute. In particular, the at least one screw of the second screw conveyor turns at 20 rounds per minute to 85 rounds per minute, preferably 23 rounds per minute to 55 rounds per minute. In particular, the at least one screw of the third screw conveyor turns at 35 rounds per minute to 85 rounds per minute, preferably 23 rounds per minute to 60 rounds per minute.

The apparatus may comprise an electronic controller, adapted to execute the method steps according to the embodiments of the method according to the invention. In particular, the electronic controller may have input/output electronics to communicate with various parts of the apparatus, in particular drives and actuators, and control them to execute the corresponding method steps. The drives and actuators may be adapted to execute the method steps automatically upon instruction of the electronic controller.

Embodiments of the invention will now be further described with reference to the figures in which:
Fig. 1 shows a schematic cross-sectional view of an embodiment of the inventive apparatus.
Fig. 2 shows a schematic cross-sectional view of a further embodiment of the inventive apparatus.

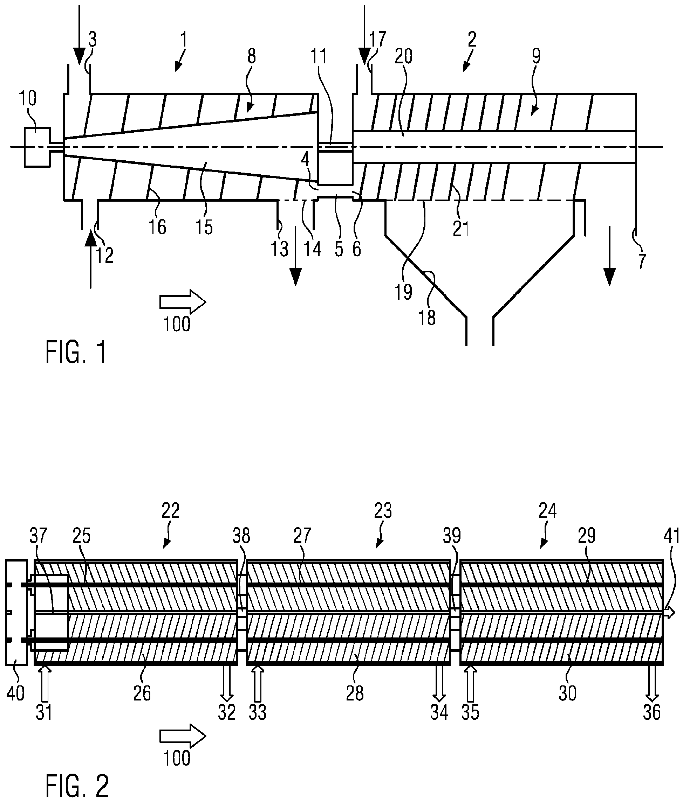

In Fig. 1 and 2 different embodiments of the inventive apparatus are depicted, wherein their structure is explained together with embodiments of the inventive method and use.

In the embodiment according to Fig. 1, the apparatus comprises a first screw conveyor 1, and a subsequent second screw conveyor 2, through which tobacco material comprising extracting liquid is continuously conveyed. The tobacco material is initially provided to the first screw conveyor 1 through a first screw conveyor inlet 3, and conveyed along the conveying direction 100 to a first screw conveyor outlet 4. The first screw conveyor outlet 4 is connected over a fluid connection 5, in the form of a pipe, to a second screw conveyor inlet 6.

In the second screw conveyor 2, the tobacco material is conveyed along the conveying direction 100 to the second screw conveyor outlet 7. The first screw conveyor 1 comprises a first screw 8 and the second screw conveyor 2 comprises a second screw 9. The first screw 8 and the second screw 9 are driven by a drive 10, in particular an electric motor. The first screw 8 and the second screw 9 may be connected via a shaft 11 or another mechanical connection, such as a gear. This enables, that the screws 8 and 9 may both be driven by only one drive. Alternatively, the first screw 8 and the second screw 9 may have mechanically separate shafts, only synchronized by electronic control of their respective drives. The first screw conveyor 1 comprises furthermore a fluid inlet 12. Extracting liquid may be provided through the fluid inlet 12 and mixed with the tobacco components, in the form of raw tobacco material, provided through the inlet 3. The mixture of the raw tobacco material and the extracting liquid is then conveyed through the first screw conveyor 1, which provides a first processing stage of the inventive extraction method. In particular, the raw tobacco material provided through the first screw conveyor inlet 3 may be tobacco leaves or preprocessed tobacco from other manufacturing processes. The raw tobacco material may in particular be dried or fermented or dried and fermented. The raw tobacco material may be fed without any extracting liquid through the first screw conveyor inlet 3. The raw tobacco material is mixed with extracting liquid, and then, in the first screw conveyor 1, subjected to a progressive increase of pressure and temperature, including rough-cutting or rough-gridding by means of the screw 8, for the purpose of homogenizing the raw tobacco material and extracting liquid to form a homogenized tobacco material. Thus, the raw tobacco material does not need to be cut before feeding it to the first screw conveyor 1, which enables an accelerated processing, for all types of raw tobacco material from the entire leaves to tobacco dust.

The first screw conveyor inlet 3 is configured to have a pulling effect, such that the tobacco material in the inlet 3 is automatically pulled into the first screw conveyor 1. At the downstream end of the first stage in the form of the first screw conveyor 1, the volume of the tobacco material may have been increased by means of absorption of the extracting liquid, and the tobacco material may be substantially homogenized and chemically consistent. At the downstream end of the first screw conveyor 1, a fluid outlet 13 may be provided. In particular, a sieve 14 is arranged in the outlet 13, preferably directly adjacent to the first screw 8. This enables that extracting liquid comprising extracted tobacco flavors and alkaloids, such as nicotine, may be separated from the tobacco material.

Thus, at the end of the first stage, an initial extraction may have been completed. In particular, the first screw 8 comprises an inner shaft 15, whose diameter increases in the conveying direction 100. Furthermore, the first screw 8 comprises a helical thread 16, whose outer diameter remains the same along the conveying direction 100. This means that the conveying volume continuously decreases in the conveying direction, leading to an increase of pressure in the tobacco material along the first process stage in the first screw conveyor 1.

Since the extracting liquid 12 injected through the first fluid inlet 12 may be heated, the temperature of the tobacco material is also increased throughout the first stage. Additionally, heating elements, which are not depicted in the figures, may be provided for the heating of the tobacco material.

After leaving the first screw conveyor 1 and passing the fluid connection 5, the tobacco material enters the second screw conveyor 2 via the second screw conveyor inlet 6. The second screw conveyor 2 comprises a fluid inlet 17 at its upstream end, through which further extracting liquid may be injected. The tobacco material is conveyed and maintained at a temperature and pressure in the second screw conveyor 2, which are higher than the temperature and pressure in the first screw conveyor 1. The second screw conveyor 2 comprises a fluid outlet 18, which extends at least halfway along the conveying direction 100 in the second screw conveyor 2. The fluid outlet 18 may comprise a sieve 19, which is arranged directly adjacent to the second screw 9. While the tobacco material is conveyed by means of the second screw 9, extracting liquid is extracted from the tobacco material through the sieve 19 and is collected in the fluid outlet 18. The remaining tobacco material is subsequently ejected through the outlet 7 at the downstream end of the second screw conveyor 2.

The diameter of the inner shaft 20 of the second screw 9 remains constant along the conveying direction. The helical threads 21 also have a constant outer diameter. A constant pitch of the helical threads 21 is provided in the upstream half of the second screw 9. However, at the downstream end of the second screw 9, the pitch of the helical threads 21 may become larger, to reduce the pressure before the tobacco material is ejected through the outlet 7. Thus, the second stage enables to extract a large quantity of the alkaloids and tobacco flavors from the tobacco material.

Overall, it is beneficial to start gentle in the beginning of the first stage with cold pressing and then increase temperature and pressure with each stage. This means that the extracted ingredients may be different from each other along the subsequent fluid outlets.

In Fig. 2, a second embodiment of an inventive apparatus is shown. In this embodiment, three screw conveyors are arranged subsequently in the conveying direction 100, namely a first screw conveyor 22, a second screw conveyor 23, and a third screw conveyor 24. Each screw conveyors comprises two parallely arranged screws, namely the first screw conveyor screws 25, 26, the second screw conveyor screws 27, 28, and the third screw conveyor screws 29, 30. Each screw conveyor 22, 23, 24 comprises a fluid inlet and a fluid outlet, in particular for injecting extracting liquid, and collecting extracting liquid with tobacco flavors and alkaloids, respectively. The first screw conveyor 22 comprises a fluid inlet 31 and a fluid outlet 32, the second screw conveyor comprises a fluid inlet 33 and a fluid outlet 34, the third screw conveyor comprises a fluid inlet 35 and a fluid outlet 36. The first screw conveyor 1 comprises a first screw conveyor inlet 37 for raw tobacco material. In between the first screw conveyor 22 and the second screw conveyor 23, a fluid connection 38 for the transfer of tobacco material from the first screw conveyor 22 to the second screw conveyor 23 is provided. In between the second screw conveyor 23 and the third screw conveyor 24, a fluid connection 39 is provided for the transfer of tobacco material in between the second screw conveyor 23 at the third screw conveyor 24. A drive 40 is provided for driving the screws of the respective screws conveyors 22, 23, 24. In particular, all screws 25, 26, 27, 28, 29, 30 may be mechanically coupled by gears or drive shafts, such that all screws can be driven with only one drive 40.

In the first stage in the form of the first screw conveyor 22, the tobacco material is subjected to an extracting liquid, which is injected through the first fluid inlet 31. The temperature and pressure of the tobacco material is progressively increased in the first stage. Furthermore, the tobacco material is homogenized in the first stage. Extracting liquid with extracted tobacco flavors and alkaloids may already be collected at the fluid outlet 32.

In the second stage in the form of the second screw conveyor 23, further extracting liquid, in particular in the form of water or water vapor is injected through the fluid inlet 33. Thus, the homogenized tobacco material and the extracting liquid is conveyed through the second stage, and the extracting liquid is separated from the tobacco material at the fluid outlet 34.

In the second stage, the pressure and temperature is preferably progressively increased, for the purpose of keeping the extracting liquid, in particular water and potentially extracting agents in a homogeneous mixture with the solid parts of the tobacco material, to enable extraction.

Thus, the extracting liquid will have an increased content of tobacco flavors and alkaloids at the end of the second stage, when it is collected at the fluid outlet 34. In the third stage, the third screw conveyor 24 may exert still higher pressure on the tobacco material, and additional extracting liquid may be injected. Thus, the remaining tobacco flavors and alkaloids can be extracted. In particular, in the third stage the pressure and temperature is maintained at a high level or even increased at the upstream end. The pressure may be reduced at the downstream end of the third screw conveyor 24, by means of changing the pitch and design of the helical threads of the screws 29, 30. At the downstream end of the third screw conveyor 24, the shear forces in the tobacco material may be increased, which enables further extraction from the tobacco material. The tobacco material is then discharged at the outlet 41.

The extracting liquid comprising tobacco flavors and alkaloids may be further processed and used for aerosol generating articles, for example electronic cigarettes.

Thus, according to the invention it is possible to enable an extraction process, in which several process parameters, such as temperature, pressure, and friction, may be continuously altered along the conveying direction. This enables a continuous process with characteristics, which can be optimized for the respective processed raw tobacco material. For example, the shear forces may be increased in the first stage, when processing larger leaves or leaf parts of tobacco material, to disintegrate these larger leaves or leaf parts into smaller parts. The pressure may be increased when processing preprocessed tobacco material. Furthermore, a washing step may be included in the first stage to wash preprocessed or raw tobacco material. Furthermore, different processing stages enable to use subsequently different extracting agents and liquids, which are adapted to the respective tobacco material present in the stages.

## Claims

1. Apparatus for the extraction of ingredients from plant material, in particular alkaloids or tobacco flavors from tobacco material, comprising
a first screw conveyor (1, 22) with at least one rotatably driven first screw (8, 25, 26), which is adapted to convey the plant material from a first screw conveyor inlet (3, 37) to a first screw conveyor outlet (4), and
a second screw conveyor (2, 23) with at least one rotatably driven second screw (9, 27, 28), which is adapted to convey the plant material from a second screw conveyor inlet (6) to a second screw conveyor outlet (7, 36),
wherein a fluid connection (5, 38) is provided in between the first screw conveyor outlet (4) and the second screw conveyor inlet (6), the fluid connection (5, 38) being adapted to enable flow of plant material from the first screw conveyor outlet (4) to the second screw conveyor inlet (6),
**characterized in that**
the first screw conveyor (1, 22) has a first fluid outlet (13, 32) at its downstream side, and
the second screw conveyor (2, 23) has a second fluid outlet (18, 34) at its downstream side.

2. Apparatus according to claim 1, wherein at least one of the screw conveyors (1, 2, 22, 23) has two rotatably driven screws (25, 26, 27, 28) arranged therein.

3. Apparatus according to claim 2, wherein the crests of the threads on the proximal sides of the screws (25, 26, 27, 28) are adjacent to each other.

4. Apparatus according to any one of the previous claims, comprising a third screw conveyor (24) with at least one rotatably driven screw (29, 30), which is adapted to convey the plant material from a third screw conveyor inlet to a third screw conveyor outlet (41).

5. Apparatus according to any one of the previous claims, wherein in at least one of the screw conveyors (1, 2, 22, 23, 24), the pitch of the threads of the at least one rotatably driven screw (8, 9, 25, 26, 27, 28, 29, 30) is varied.

6. Apparatus according to any one of the previous claims, wherein in at least one of the screw conveyors (1, 2, 22, 23, 24) the diameter of the shaft (15, 20) of the at least one rotatably driven screw (8, 9, 25, 26, 27, 28, 29, 30) is varied along the axial direction of the screw (8, 9, 25, 26, 27, 28, 29, 30).

7. Apparatus according to any one of the previous claims, wherein at least one of the screw conveyors (1, 2, 22, 23, 24) comprises a sieve (14, 19) being arranged at least partially in the axial and circumferential direction adjacent to the screw (8, 9, 25, 26, 27, 28, 29, 30), to allow the separation of fluid from the plant material.

8. Apparatus according to any one of the previous claims, wherein at least one of the screw conveyors (1, 2, 22, 23, 24) comprises a fluid inlet (12, 17, 31, 33, 35) at its upstream side.

9. Apparatus according to any one of the previous claims, wherein at least one of the screw conveyors (1, 2, 22, 23, 24) is adapted to alter the pressure in the tobacco material while conveying the tobacco material.

10. Method for the extraction of at least one alkaloid or at least one tobacco flavor from tobacco material, in particular from preprocessed tobacco material, with the following steps:
mixing tobacco material and an extracting liquid, and
continuously conveying the tobacco material and extracting liquid, while separating the extracting liquid from the tobacco material,
wherein the tobacco material is continuously conveyed through subsequent stages, wherein in each of these stages, extracting liquid is at least partially separated from the tobacco material at a downstream position.

11. Method according to claim 10, wherein in each of the stages, extracting liquid is injected at an upstream position.

12. Method according to claim 10 or 11, wherein the temperature of the tobacco material at the end of the second stage is higher than the temperature of the tobacco material at the end of the first stage.

13. Method according to any one of claims 10 to 12, wherein the pressure in the tobacco material at the end of the second stage is higher than the pressure in the tobacco material at the end of the first stage.

14. Method according to any one of claims 10 to 13, wherein the conveying is effected by at least two subsequent screw conveyors (1, 2, 22, 23, 24), wherein a friction factor of the screw conveyor (1, 2, 22, 23, 24) increases at least partially in the downstream direction.

15. Use of a screw conveyor (1, 2, 22, 23, 24) for extracting at least one alkaloid or at least one tobacco flavor from tobacco material, in particular from preprocessed tobacco material, wherein the tobacco material is continuously conveyed through subsequent stages, wherein in each of these stages, extracting liquid is at least partially separated from the tobacco material at a downstream position.

## Patentansprüche

1. Vorrichtung zur Extraktion von Inhaltsstoffen aus Pflanzenmaterial, insbesondere von Alkaloiden oder Geschmacksstoffen aus Tabakmaterial, umfassend
einen ersten Schneckenförderer (1, 22) mit wenigstens einer drehend angetriebenen ersten Schnecke (8, 25, 26), die zum Fördern des Pflanzenmaterials von einem ersten Schneckenförderereinlass (3, 37) zu einem ersten Schneckenfördererauslass (4) angepasst ist, und
einen zweiten Schneckenförderer (2, 23) mit wenigstens einer drehend angetriebenen zweiten Schnecke (9, 27, 28), die zum Fördern des Pflanzenmaterials von einem zweiten Schneckenförderereinlass (6) zu einem zweiten Schneckenfördererauslass (7, 36) angepasst ist,
wobei eine Fluidverbindung (5, 38) zwischen dem ersten Schneckenfördererauslass (4) und dem zweiten Schneckenförderereinlass (6) vorgesehen ist, wobei die Fluidverbindung (5, 38) zum Ermöglichen des Flusses von Pflanzenmaterial von dem ersten Schneckenfördererauslass (4) zu dem zweiten Schneckenförderereinlass (6) angepasst ist,
**dadurch gekennzeichnet, dass**
der erste Schneckenförderer (1, 22) einen ersten Fluidauslass (13, 32) an seiner stromabwärtigen Seite aufweist, und
der zweite Schneckenförderer (2, 23) einen zweiten Fluidauslass (18, 34) an seiner stromabwärtigen Seite aufweist.

2. Vorrichtung nach Anspruch 1, wobei wenigstens einer der Schneckenförderer (1, 2, 22, 23) zwei darin angeordnete, drehend angetriebene Schnecken (25, 26, 27, 28) aufweist.

3. Vorrichtung nach Anspruch 2, wobei die Gewindespitzen an den proximalen Seiten der Schnecken (25, 26, 27, 28) einander angrenzend sind.

4. Vorrichtung nach einem beliebigen der vorhergehenden Ansprüche, umfassend einen dritten Schneckenförderer (24) mit wenigstens einer drehend angetriebenen Schnecke (29, 30), die zum Fördern des Pflanzenmaterials von einem dritten Schneckenförderereinlass zu einem dritten Schneckenfördererauslass (41) angepasst ist.

5. Vorrichtung nach einem beliebigen der vorhergehenden Ansprüche, wobei in wenigstens einem der Schneckenförderer (1, 2, 22, 23, 24) die Gewindesteigung der wenigstens einen drehend angetriebenen Schnecke (8, 9, 25, 26, 27, 28, 29, 30) variiert wird.

6. Vorrichtung nach einem beliebigen der vorhergehenden Ansprüche, wobei in wenigstens einem der Schneckenförderer (1, 2, 22, 23, 24) der Durchmesser der Welle (15, 20) der wenigstens einen drehend angetriebenen Schnecke (8, 9, 25, 26, 27, 28, 29, 30) entlang der axialen Richtung der Schnecke (8, 9, 25, 26, 27, 28, 29, 30) variiert wird.

7. Vorrichtung nach einem der vorhergehenden Ansprüche, wobei wenigstens einer der Schneckenförderer (1, 2, 22, 23, 24) ein Sieb (14, 19) umfasst, das wenigstens teilweise in Axial- und Umfangsrichtung angrenzend an die Schnecke (8, 9, 25, 26, 27, 28, 29, 30) angeordnet ist, um die Trennung der Flüssigkeit von dem Pflanzenmaterial zu ermöglichen.

8. Vorrichtung nach einem beliebigen der vorhergehenden Ansprüche, wobei wenigstens einer der Schneckenförderer (1, 2, 22, 23, 24) an seiner stromaufwärtigen Seite einen Fluideinlass (12, 17, 31, 33, 35) aufweist.

9. Vorrichtung nach einem beliebigen der vorhergehenden Ansprüche, wobei wenigstens einer der Schneckenförderer (1, 2, 22, 23, 24) zur Veränderung des Drucks in dem Tabakmaterial während des Förderns des Tabakmaterials angepasst ist.

10. Verfahren zur Extraktion von wenigstens einem Alkaloid oder wenigstens einem Tabakgeschmacksstoff aus Tabakmaterial, insbesondere aus vorverarbeitetem Tabakmaterial, mit den folgenden Schritten:
Mischen von Tabakmaterial und einer Extraktionsflüssigkeit, und
kontinuierliches Fördern des Tabakmaterials und der Extraktionsflüssigkeit, während der Trennung der Extraktionsflüssigkeit von dem Tabakmaterial,
wobei das Tabakmaterial kontinuierlich durch nachfolgende Stufen befördert wird, wobei in jeder dieser Stufen die Extraktionsflüssigkeit wenigstens teilweise von dem Tabakmaterial an einer stromabwärtigen Position getrennt wird.

11. Verfahren nach Anspruch 10, wobei in jeder der Stufen Extraktionsflüssigkeit an einer stromaufwärtigen Position injiziert wird.

12. Verfahren nach Anspruch 10 oder 11, wobei die Temperatur des Tabakmaterials am Ende der zweiten Stufe höher ist als die Temperatur des Tabakmaterials am Ende der ersten Stufe.

13. Verfahren nach einem beliebigen der Ansprüche 10 bis 12, wobei der Druck in dem Tabakmaterial am Ende der zweiten Stufe höher ist als der Druck im Tabakmaterial am Ende der ersten Stufe.

14. Verfahren nach einem beliebigen der Ansprüche 10 bis 13, wobei das Fördern durch wenigstens zwei aufeinanderfolgende Schneckenförderer (1, 2, 22, 23, 24) erfolgt, wobei ein Reibungsfaktor des Schneckenförderers (1, 2, 22, 23, 24) wenigstens teilweise in der stromabwärtigen Richtung zunimmt.

15. Verwendung eines Schneckenförderers (1, 2, 22, 23, 24) zum Extrahieren von wenigstens einem Alkaloid oder wenigstens einem Tabakgeschmacksstoff aus Tabakmaterial, insbesondere aus vorverarbeitetem Tabakmaterial, wobei das Tabakmaterial kontinuierlich durch aufeinanderfolgende Stufen gefördert wird, wobei in jeder dieser Stufen Extraktionsflüssigkeit wenigstens teilweise von dem Tabakmaterial an einer stromabwärtigen Position getrennt wird.

## Revendications

1. Appareil pour l'extraction d'ingrédients d'une matière végétale, en particulier d'alcaloïdes ou d'arômes de tabac à partir de matière de tabac, comprenant
un premier transporteur à vis (1, 22) avec au moins une première vis entraînée en rotation (8, 25, 26), qui est adapté au transport de la matière végétale depuis une entrée de premier transporteur à vis (3, 37) jusqu'à une sortie de premier transporteur à vis (4), et
un deuxième transporteur à vis (2, 23) avec au moins une deuxième vis entraînée en rotation (9, 27, 28), qui est adapté au transport de la matière végétale depuis une entrée de deuxième transporteur à vis (6) jusqu'à une sortie de deuxième transporteur à vis (7, 36),
dans lequel une connexion fluidique (5, 38) est prévue entre la sortie de premier convoyeur à vis (4) et l'entrée de deuxième convoyeur à vis (6), la connexion fluidique (5, 38) étant adaptée pour permettre l'écoulement de matière végétale depuis la sortie de premier convoyeur à vis (4) vers l'entrée de deuxième convoyeur à vis (6),
**caractérisé en ce que**
le premier transporteur à vis (1, 22) a une première sortie de fluide (13, 32) au niveau de son côté aval, et
le deuxième transporteur à vis (2, 23) a une deuxième sortie de fluide (18, 34) au niveau de son côté aval.

2. Appareil selon la revendication 1, dans lequel au moins l'un des transporteurs à vis (1, 2, 22, 23) a deux vis entraînées en rotation (25, 26, 27, 28) agencées à l'intérieur.

3. Appareil selon la revendication 2, dans lequel les crêtes des filets sur les côtés proximaux des vis (25, 26, 27, 28) sont adjacentes les unes aux autres.

4. Appareil selon l'une quelconque des revendications précédentes, comprenant un troisième transporteur à vis (24) avec au moins une vis entraînée en rotation (29, 30), qui est adapté au transport de la matière végétale depuis une entrée de troisième transporteur à vis jusqu'à une sortie de troisième transporteur à vis (41).

5. Appareil selon l'une quelconque des revendications précédentes, dans lequel dans au moins l'un des transporteurs à vis (1, 2, 22, 23, 24), le pas des filets de l'au moins une vis entraînée en rotation (8, 9, 25, 26, 27, 28, 29, 30) est modifié.

6. Appareil selon l'une quelconque des revendications précédentes, dans lequel, dans au moins l'un des transporteurs à vis (1, 2, 22, 23, 24), le diamètre de l'arbre (15, 20) de l'au moins une vis entraînée en rotation (8, 9, 25, 26, 27, 28, 29, 30) est modifié le long de la direction axiale de la vis (8, 9, 25, 26, 27, 28, 29, 30) .

7. Appareil selon l'une quelconque des revendications précédentes, dans lequel au moins l'un des transporteurs à vis (1, 2, 22, 23, 24) comprend un tamis (14, 19) agencé au moins partiellement dans la direction axiale et circonférentielle adjacente à la vis (8, 9, 25, 26, 27, 28, 29, 30), pour permettre la séparation du fluide de la matière végétale.

8. Appareil selon l'une quelconque des revendications précédentes, dans lequel au moins l'un des transporteurs à vis (1, 2, 22, 23, 24) comprend une entrée de fluide (12, 17, 31, 33, 35) au niveau de son côté amont.

9. Appareil selon l'une quelconque des revendications précédentes, dans lequel au moins l'un des transporteurs à vis (1, 2, 22, 23, 24) est adapté à la modification de la pression dans la matière de tabac tout en transportant la matière de tabac.

10. Procédé d'extraction d'au moins un alcaloïde ou d'au moins un arôme de tabac à partir de matière de tabac, en particulier à partir de matière de tabac prétraitée, avec les étapes suivantes :
le mélange de la matière de tabac et d'un liquide d'extraction, et
le transport en continu de la matière de tabac et du liquide d'extraction, tout en séparant le liquide d'extraction de la matière de tabac,
dans lequel la matière de tabac est transportée en continu à travers des étapes ultérieures, dans lequel dans chacune de ces étapes, le liquide d'extraction est au moins partiellement séparé de la matière de tabac au niveau d'une position en aval.

11. Procédé selon la revendication 10, dans lequel, dans chacune des étapes, le liquide d'extraction est injecté au niveau d'une position en amont.

12. Procédé selon la revendication 10 ou 11, dans lequel la température de la matière de tabac à la fin de la deuxième étape est supérieure à la température de la matière de tabac à la fin de la première étape.

13. Procédé selon l'une quelconque des revendications 10 à 12, dans lequel la pression dans la matière de tabac à la fin de la deuxième étape est supérieure à la pression dans la matière de tabac à la fin de la première étape.

14. Procédé selon l'une quelconque des revendications 10 à 13, dans lequel le transport est effectué par au moins deux transporteurs à vis (1, 2, 22, 23, 24) subséquents montés en aval, dans lequel un facteur de frottement du transporteur à vis (1, 2, 22, 23, 24) augmente au moins partiellement dans la direction aval.

15. Utilisation d'un transporteur à vis (1, 2, 22, 23, 24) pour extraire au moins un alcaloïde ou au moins un arôme de tabac d'une matière de tabac, en particulier d'une matière de tabac prétraitée, dans laquelle la matière de tabac est transportée en continu à travers des étapes ultérieures, dans laquelle, dans chacune de ces étapes, le liquide d'extraction est au moins partiellement séparé de la matière de tabac au niveau d'une position en aval.
